# EUROPÄISCHE PATENTSCHRIFT

(11) **EP 3 060 822 B1**
(45) Veröffentlichungstag und Bekanntmachung des Hinweises auf die Patenterteilung: **22.11.2017**
(21) Anmeldenummer: 14786666.9
(22) Anmeldetag: 20.10.2014
(51) Int. Cl.: F16D 65/00, F16D 65/092

(54) **TRÄGERKÖRPER FÜR EINEN BREMSBELAG EINER SCHEIBENBREMSE MIT TILGERMASSE ZUR VERÄNDERUNG DER SCHWINGUNG**
CARRIER BODY FOR A BRAKE PAD OF A DISK BRAKE WITH ABSORBER MASS FOR CHANGING THE VIBRATION
ÉLÉMENT SUPPORT POUR GARNITURE DE FREIN D'UN FREIN À DISQUE COMPRENANT UNE MASSE FILTRANTE POUR MODIFIER LA VIBRATION

(30) Priorität: 21.10.2013 DE 102013111584
(43) Veröffentlichungstag der Anmeldung: 31.08.2016
(73) Patentinhaber: Federal-Mogul Bremsbelag GmbH, 21509 Glinde (DE)
(72) Erfinder: KARATAS, Ilhami, 21509 Glinde (DE)
(74) Vertreter: RGTH
(86) Internationale Anmeldenummer: PCT/EP2014/072448
(87) Internationale Veröffentlichungsnummer: WO 2015/059097

(56) Entgegenhaltungen:
- WO-A1-2009/001381
- DE-A1- 2 914 629
- US-A1- 2004 134 725

## Beschreibung

Die Erfindung betrifft einen Trägerkörper für einen Bremsbelag einer Scheibenbremse, wobei an einer Reibbelagträgerplatte des Trägerkörpers zur Veränderung der Schwingung mindestens eine erste Tilgermasse starr angeordnet ist.

### Stand der Technik

Aus dem Stand der Technik ist bekannt, an einer Reibbelagträgerplatte für Bremsbeläge Massenelemente zur Veränderung der Schwingung_und somit zur Geräuschminderung anzubringen.

Aus der EP 1 307 665 B1 ist ein Bremsklotz für eine Scheibenbremse bekannt, der eine Platte zum Tragen eines Reibbelages aufweist, wobei der Bremsklotz eine Einrichtung aufweist, die der Platte starr zugeordnet ist, um einen einzelnen starren Körper zu bilden und zum Variieren der Masse von zumindest einem Teil der Platte, um eine Trägheit des Bremsklotzes zu erreichen, die im Wesentlichen Schwingungen des Bremsklotzes verhindert, die ein Geräusch der Scheibenbremse während des Bremsens verursachen könnte.

In der DE 10 331 052 A2 wird eine Bremsbelagrückenplatte für einen Bremsbelag einer Fahrzeug-Scheibenbremse beschrieben. Dabei ist an der Bremsbelagrückenplatte eine Tilgermasse zur Veränderung der Schwingung vorgesehen, wobei an einem Tragabschnitt für den Bremsbelag mindestens ein länglicher Arm angeformt ist, der ein mit dem Tragabschnitt verbundenes Ende und ein freies Ende aufweist, bis zu einem freien Ende berührungsfrei neben dem Tragabschnitt verläuft und in der Haupterstreckungsebene der Bremsbelagrückenplatte liegt.

Aus der WO 2009/001 381 A1 ist ein Bremsklotz für Scheibenbremsen bekannt, welcher eine Platte, die als Stütze für eine Reibmaterialschicht dient, aufweist, wobei zumindest eine Last an die Platte angelegt ist und daran befestigt ist, mittels Klemmen. Die Last verändert die Masse von zumindest einem Teil von der Platte, um eine Trägheit von dem Bremsklotz zu erzielen, die im Wesentlichen die Vibrationen von dem Bremsklotz, während dem Bremsen verhindert. Die Last weist zumindest eine Stoßfläche auf, die geeignet ist, gegen die Kante von der Platte zu stoßen und dadurch eine Beschränkung der Rotation von der Last um eine Rotationsachse von der Scheibe definiert.

### Darstellung der Erfindung: Aufgabe, Lösung, Vorteile

Aufgabe der vorliegenden Erfindung ist es, einen Trägerkörper für einen Bremsbelag einer Scheibenbremse mit einer Reibbelagträgerplatte und mindestens einer ersten Tilgermasse zur Veränderung der Schwingung_derart zu verbessern, dass die starre Verbindung zwischen Reibbelagträgerplatte und Tilgermasse robuster gegenüber den im Stand der Technik vorgeschlagenen Lösungen ist und höheren Belastungen standhält.

Diese Aufgabe wird durch das Vorsehen eines Trägerkörpers für einen Bremsbelag einer Scheibenbremse gelöst, wobei der Trägerkörper eine Reibbelagträgerplatte zur Aufnahme eines Reibbelags, sowie mindestens eine starr mit der Reibbelagträgerplatte verbundene erste Tilgermasse zur Veränderung der Schwingung_aufweist. Die erste Tilgermasse weist einen ersten stiftförmigen Vorsprung, welcher von einer ersten Seitenfläche der ersten Tilgermasse hervorsteht, auf. An dem Ende des ersten stiftförmigen Vorsprungs weist der stiftförmige Vorsprung einen Kopf auf. Die Reibbelagträgerplatte des Trägerkörpers weist zur Aufnahme des ersten stiftförmigen Vorsprungs ein erstes Loch auf.

Dabei ist der erste stiftförmige Vorsprung derart in das erste Loch eingesetzt, dass der Kopf und somit das Ende des ersten stiftförmigen Vorsprungs aus dem ersten Loch hervorsteht. Ferner ist erfindungsgemäß im Bereich einer ersten Kante des ersten Lochs in der Reibbelagträgerplatte eine erste Fase, beziehungsweise Abschrägung, vorgesehen. Der Kopf, beziehungsweise das Ende, des ersten stiftförmigen Vorsprungs liegt zumindest teilweise an dieser ersten Fase an. Somit steht der Kopf, beziehungsweise das Ende des ersten stiftförmigen Vorsprungs zumindest teilweise in direktem Kontakt mit der Fase, beziehungsweise mit der Abschrägung, im Bereich der ersten Kante des ersten Lochs der Reibbelagträgerplatte.

Der erfindungsgemäße Trägerkörper weist somit zumindest eine Reibbelagträgerplatte und eine starr mit dieser Reibbelagträgerplatte verbundene erste Tilgermasse auf. Die Reibbelagträgerplatte kann dabei aus jedem geeigneten Material bestehen und ist im Wesentlichen plattenförmig ausgebildet. Zur Herstellung eines Bremsbelages wird ein Reibbelag, beziehungsweise Reibbelagmaterial, auf einer ersten Seitenfläche der Reibbelagträgerplatte angebracht.

Durch das Vorsehen einer Tilgermasse, welche starr mit der Reibbelagträgerplatte verbunden ist, kann die Schwingung verändert und somit Geräusche beim Bremsen reduziert werden. Hierdurch wird somit die Eigenfrequenz der Vorrichtung verändert. Unter einer Tilgermasse ist im Sinne dieser Erfindung ein Massenelement aus jedem geeigneten Material zu verstehen, welches nicht an mehreren Objekten befestigt, beziehungsweise starr mit mehreren Objekten verbunden ist, sondern lediglich mit der Reibbelagträgerplatte des Trägerkörpers starr in Verbindung steht.

Unter einer starren Verbindung ist im Sinne dieser Erfindung eine Verbindung zwischen Reibbelagträgerplatte und der Tilgermasse zu verstehen, wobei die Tilgermasse nicht drehbar oder schwenkbar um eine Achse ist, sondern fest an der Reibbelagträgerplatte in einer bestimmten und vorgegebenen Position angeordnet ist. Somit kann die starre Verbindung zwischen der Reibbelagträgerplatte und der ersten Tilgermasse lediglich durch Einwirkung von Gewalt oder sehr hoher Kraft getrennt werden.

Unter einem stiftförmigen Vorsprung, welcher von der ersten Seitenfläche der ersten Tilgermasse hervorsteht, ist ein länglich ausgebildeter Vorsprung zu verstehen. Beispielsweise kann es sich um einen zylinderförmigen, kegelförmigen, sowie auch um einen eckig ausgestalteten, länglichen Vorsprung handeln. Unter länglichem Vorsprung ist ein Vorsprung zu verstehen, welcher eine größere Länge als maximale Breite aufweist.

Unter dem Kopf des stiftförmigen Vorsprungs ist das Ende des stiftförmigen Vorsprungs zu verstehen. Somit ist der Kopf des stiftförmigen Vorsprungs im Bereich einer Stirnseite des ersten stiftförmigen Vorsprungs angeordnet, wobei diese Stirnseite von der ersten Seitenfläche der ersten Tilgermasse abgewandt ist. Somit erstreckt sich der stiftförmige Vorsprung, ausgehend von der ersten Seitenfläche der ersten Tilgermasse, zu seinem Ende beziehungsweise seinem Kopf. Der Kopf des stiftförmigen Vorsprungs ist einstückig mit dem stiftförmigen Vorsprung ausgebildet. Bevorzugterweise ist der stiftförmige Vorsprung einstückig mit der Tilgermasse ausgebildet. Der Kopf des stiftförmigen Vorsprungs wird durch den stirnseitigen Bereich des stiftförmigen Vorsprungs gebildet. Vor Ausüben einer Kraft auf dem stiftförmigen Vorsprung, beziehungsweise vor Herstellung der starren Verbindung zwischen der Reibbelagträgerplatte und der ersten Tilgermasse, stellt die Stirnseite des stiftförmigen Vorsprungs diesen Kopf dar. Während der Ausübung einer Kraft auf den stiftförmigen Vorsprung wird dieser Kopf verformt und weist die Form eines flachen Kopfes und / oder die Form eines Pilzkopfes auf. Dabei weist dieser Kopf nach Ausübung der Kraft einen gegenüber dem restlichen stiftförmigen Vorsprung einen größeren Durchmesser oder eine größere maximale Breite auf. Dieser Kopf wird somit durch die Ausübung der Kraft derart verformt, dass er umfänglich betrachtet verbreitert wird.

Da der erste stiftförmige Vorsprung derart in das erste Loch der Reibbelagträgerplatte eingesetzt ist, dass der Kopf des ersten stiftförmigen Vorsprungs aus dem ersten Loch hervorsteht, ist der erste stiftförmige Vorsprung länger ausgebildet als die Tiefe des ersten Lochs. Vorzugsweise ist vorgesehen, dass vor Ausüben einer Kraft auf den ersten stiftförmigen Vorsprung und nach Einsetzen des ersten stiftförmigen Vorsprungs in das erste Loch der erste stiftförmige Vorsprung nicht nur mit dessen Stirnseite, sondern auch darüber hinaus aus dem ersten Loch hervorsteht. Nach Ausüben der Kraft auf den ersten stiftförmigen Vorsprung steht dieser noch mit dessen Kopf aus dem ersten Loch hervor.

Bei der ersten Kante des ersten Lochs handelt es sich um eine umlaufende, das erste Loch begrenzende, Kante, im Bereich des Übergangs zwischen einer zweiten Seitenfläche der Reibbelagträgerplatte und der Lochinnenseite, beziehungsweise der Innenwand, des ersten Lochs.

Unter einer Fase ist im Sinne der vorliegenden Erfindung eine Abschrägung oder Abrundung der ersten Kante zu verstehen. Nach Einsetzen des ersten stiftförmigen Vorsprungs in das erste Loch der Reibbelagträgerplatte und Befestigen der ersten Tilgermasse mit der Reibbelagträgerplatte liegt der Kopf des ersten stiftförmigen Vorsprungs erfindungsgemäß zumindest teilweise an der ersten Fase an. Somit schmiegt sich der Kopf des ersten stiftförmigen Vorsprungs zumindest bereichsweise an die erste Fase an. Beispielsweise liegt der pilzförmige oder flache Kopf des ersten stiftförmigen Vorsprungs nach Ausüben der Kraft auf den ersten stiftförmigen Vorsprung mit dessen Unterseite und / oder Randbereich an der ersten Fase an.

Durch das Vorsehen einer ersten Fase im Bereich der ersten Kante des ersten Lochs in der Reibbelagträgerplatte und das Einsetzen, beziehungsweise das anschließende Befestigen, des ersten stiftförmigen Vorsprungs im ersten Loch, kann ein besserer Formschluss zwischen der Tilgermasse und der Reibbelagträgerplatte erreicht werden. Hierdurch wird die Verbindung zwischen der ersten Tilgermasse und der Reibbelagträgerplatte robuster. Das Material des stiftförmigen Vorsprungs wird im Bereich seines Kopfes beim Befestigen nicht, beziehungsweise nicht so schnell und leicht, beschädigt. Beispielsweise können somit Rissbildungen im Bereich des Kopfes des ersten stiftförmigen Vorsprungs vermieden oder zumindest verringert werden.

Eine starre Verbindung zwischen der Reibbelagträgerplatte und der ersten Tilgermasse kann nach Einsetzen des ersten stiftförmigen Vorsprungs in das erste Loch durch Ausüben einer senkrecht auf den ersten stiftförmigen Vorsprung gerichteten Kraft erreicht werden. Beispielsweise kann durch Vertaumeln oder Pressen der erste stiftförmige Vorsprung zumindest im Bereich seines Kopfes gestaucht werden. Unter Vertaumeln ist ein im Wesentlichen senkrechtes Pressen beziehungsweise Drücken mittels eines Presskopfes oder Andrückers und gleichzeitiges Drehen und / oder Schwenken des Presskopfes oder Andrückers zu verstehen.

Insbesondere durch das Vorsehen einer ersten Fase im Bereich der ersten Kante des ersten Lochs der Reibbelagträgerplatte kann bei Ausüben einer senkrecht gerichteten Kraft auf das Ende des ersten stiftförmigen Vorsprungs auch eine bessere und höhere Verstauchung im Bereich der Mitte und des Anfangs des ersten stiftförmigen Vorsprungs erreicht werden. Auch somit kann der Formschluss zwischen Reibbelagträgerplatte und der ersten Tilgermasse, beziehungsweise des ersten stiftförmigen Vorsprungs innerhalb des ersten Lochs, also der Formschluss zwischen des ersten stiftförmigen Vorsprungs und der Innenwand des ersten Lochs, erhöht werden.

Die erste Fase kann als Abschrägung oder auch als Abrundung der ersten Kante des ersten Lochs der Reibbelagträgerplatte ausgebildet werden. Bevorzugterweise ist durch die erste Fase eine Abschrägung, ganz besonders bevorzugterweise eine vollumfängliche Abschrägung, der ersten Kante des ersten Lochs der Reibbelagträgerplatte ausgebildet. Durch das Vorsehen der ersten Fase weist das erste Loch in diesem Bereich eine größere Öffnung auf als im Inneren des ersten Lochs.

Ferner ist bevorzugterweise vorgesehen, dass die erste Fase in einem ersten Winkel zur Innenwand des ersten Lochs steht, wobei der erste Winkel zwischen 10° und 80° beträgt. Besonders bevorzugterweise liegt der erste Winkel zwischen der ersten Fase und der Innenwand des ersten Lochs zwischen 25° und 60, sowie ganz besonders bevorzugterweise zwischen 40° und 50°. Beispielsweise könnte der erste Winkel 45° betragen. Dabei ist der erste Winkel bevorzugterweise vollumfänglich um das erste Loch herum, beziehungsweise vollumfänglich entlang der ersten Kante des ersten Lochs, im Wesentlichen konstant ausgebildet.

Die erste Fase ragt bevorzugterweise über eine erste Tiefe in das erste Loch hinein, wobei die erste Tiefe weniger als 50 % der gesamten Tiefe des ersten Lochs entspricht. Besonders bevorzugterweise entspricht die erste Tiefe, über welche die erste Fase in das erste Loch hineinragt, weniger als 40 %, ganz besonders bevorzugterweise weniger als 30 % der gesamten Tiefe des ersten Lochs. Beispielsweise könnte die erste Fase über eine erste Tiefe von weniger als 20 % der gesamten Tiefe des ersten Lochs in das erste Loch hineinragen.

Die Tiefe des ersten Lochs entspricht im Wesentlichen der Dicke der Reibbelagträgerplatte im Bereich des ersten Lochs. Somit ist das erste Loch durchgehend in der Reibbelagträgerplatte vorgesehen. Unter der Tiefe des ersten Lochs ist die gesamte Tiefe beziehungsweise Länge des ersten Lochs durch die Reibbelagträgerplatte zu verstehen. Unter der ersten Tiefe, über welche die erste Fase in das Loch hineinragt, ist der Abstand zwischen einer Ebene, welche auf der zweiten Seitenfläche der Reibbelagträgerplatte liegt und dem Ende der ersten Fase innerhalb des ersten Lochs entlang einer Mittelachse des ersten stiftförmigen Vorsprungs zu verstehen. Somit ist unter der ersten Tiefe der senkrecht in das erste Loch hineinragende Abstand bis zum Ende der ersten Fase zu verstehen.

Der erste stiftförmige Vorsprung kann jede geeignete Form aufweisen. Bevorzugterweise ist der erste stiftförmige Vorsprung konisch ausgebildet. Dabei nimmt der Querschnitt des ersten stiftförmigen Vorsprungs von der ersten Seitenfläche der ersten Tilgermasse aus betrachtet zum Kopf des ersten stiftförmigen Vorsprungs hin ab. Besonders bevorzugterweise nimmt der Querschnitt von der ersten Seitenfläche der ersten Tilgermasse betrachtet zum Kopf des ersten stiftförmigen Vorsprungs hin konstant und linear ab. Somit ist bevorzugterweise vorgesehen, dass der erste stiftförmige Vorsprung zumindest bereichsweise kegelförmig ausgebildet ist oder die Form eines Kegelausschnitts aufweist. Dabei kann der Querschnitt des ersten stiftförmigen Vorsprungs rund, oval oder eckig ausgebildet sein.

Bevorzugterweise ist in der ersten Fase mindestens eine Kerbe angeordnet. Dabei ist besonders bevorzugterweise vorgesehen, dass die mindestens eine Kerbe vollumfänglich um das erste Loch herum angeordnet ist. Ferner ist bevorzugterweise vorgesehen, dass die Kerbe ringförmig in der ersten Fase um das erste Loch herum angeordnet ist. Des Weiteren können mehrere voneinander beabstandete Kerben ringförmig in der ersten Fase um das erste Loch herum angeordnet sein.

Die erste Seitenfläche der ersten Tilgermasse liegt bevorzugterweise an einer ersten Seitenfläche der Reibbelagträgerplatte an. Somit steht die erste Tilgermasse im Bereich seiner ersten Seitenfläche zumindest bereichsweise mit der Reibbelagträgerplatte in direktem Kontakt. Dabei ist bevorzugterweise vorgesehen, dass an der ersten Seitenfläche der Reibbelagträgerplatte der Reibbelag, beziehungsweise das Reibbelagmaterial, anordbar ist. An der der ersten Seitenfläche der Reibbelagträgerplatte abgewandten zweiten Seitenfläche ist bevorzugterweise ein Dämpfungsblech anordbar.

Ferner ist bevorzugterweise vorgesehen, dass die Innenwand des ersten Lochs in einem zweiten Winkel zur ersten Seitenfläche der ersten Tilgermasse steht, wobei der zweite Winkel zwischen 75° und 105°, besonders bevorzugterweise zwischen 80° und 100°, sowie ganz besonders bevorzugterweise zwischen 85° und 95°, liegt. Beispielsweise kann der zweite Winkel im Bereich einer zweiten Kante des ersten Lochs im Wesentlichen rechtwinklig ausgebildet sein. Somit ist der Eingangsbereich des ersten Lochs in dem Bereich, in dem die erste Seitenfläche der ersten Tilgermasse an der ersten Seitenfläche der Reibbelagträgerplatte anliegt, bevorzugterweise im Wesentlichen rechtwinklig ausgebildet ist, wobei der Ausgangsbereich des ersten Lochs, also im Bereich der ersten Kante des ersten Lochs, durch die erste Fase abgeschrägt ist.

Der erste stiftförmige Vorsprung ist bevorzugterweise innerhalb des ersten Lochs im Wesentlichen vollumfänglich mit der Innenwand des ersten Lochs in Kontakt beziehungsweise liegt an dieser an. Somit ist bevorzugterweise zwischen dem ersten stiftförmigen Vorsprung und der Innenwand des ersten Lochs ein im Wesentlichen vollumfänglicher Formschluss gebildet. Besonders bevorzugterweise ist der Formschluss innerhalb des ersten Lochs zwischen dem ersten stiftförmigen Vorsprung und der Innenwand des ersten Lochs im Wesentlichen über die gesamte Länge beziehungsweise die gesamte Tiefe des ersten Lochs ausgebildet.

Der erste stiftförmige Vorsprung ragt bevorzugterweise mit seinem Kopf über eine erste Länge aus dem ersten Loch heraus, wobei die erste Länge weniger als 25 %, besonders bevorzugterweise weniger als 15 %, ganz besonders bevorzugterweise weniger als 10 %, der gesamten Tiefe, beziehungsweise Länge, des ersten Lochs entspricht. Üblicherweise weist eine Reibbelagträgerplatte für einen Bremsbelag einer Scheibenbremse für Kraftfahrzeuge eine Dicke zwischen 5 mm und 15 mm auf. Beispielsweise könnte das erste Loch eine gesamte Tiefe von 10 mm aufweisen, wobei der erste stiftförmige Vorsprung mit seinem Kopf lediglich über eine erste Länge von 1 mm bis 2 mm aus dem ersten Loch herausragt. Die erste Länge, über die der erste stiftförmige Vorsprung mit seinem Kopf aus dem ersten Loch herausragt, wird nach Ausüben der Kraft auf den ersten stiftförmigen Vorsprung, beziehungsweise nach Herstellung der starren Verbindung zwischen Reibbelagträgerplatte und der ersten Tilgermasse bestimmt.

Der erste stiftförmige Vorsprung kann jeden geeigneten Querschnitt aufweisen. Beispielsweise kann der erste stiftförmige Vorsprung einen eckigen, beispielsweise einen dreieckigen, viereckigen, fünfeckigen oder sechseckigen Querschnitt aufweisen. Ferner könnte der erste stiftförmige Vorsprung einen runden oder ovalen Querschnitt aufweisen. Dabei ist bevorzugterweise vorgesehen, dass die Form des ersten Lochs, beziehungsweise der Querschnitt des ersten Lochs einen korrespondierenden Querschnitt zum Querschnitt des ersten stiftförmigen Vorsprungs aufweist. Die maximale Breite des stiftförmigen Vorsprungs ist dabei bevorzugterweise geringfügig kleiner ausgebildet als die minimale Öffnungsbreite des ersten Lochs. Somit kann der erste stiftförmige Vorsprung ohne Verformung oder größerer Krafteinwirkung in das erste Loch eingesetzt werden.

Erst nach Einsetzen des ersten stiftförmigen Vorsprungs in das erste Loch wird durch Ausübung einer senkrecht auf den Kopfbereich des ersten stiftförmigen Vorsprungs gerichteten Kraft eine Verstauchung, beziehungsweise Verformung des ersten stiftförmigen Vorsprungs im Kopfbereich und bevorzugterweise innerhalb des ersten Lochs erreicht. Dadurch wird der erste stiftförmige Vorsprung gestaucht und ein Formschluss zwischen dem ersten stiftförmigen Vorsprung und der Innenwand des ersten Lochs erzielt.

Des Weiteren ist bevorzugterweise vorgesehen, dass der Trägerkörper eine starr mit der Reibbelagträgerplatte verbundene zweite Tilgermasse zur Veränderung der Schwingung aufweist. Die zweite Tilgermasse ist bevorzugterweise wie die erste Tilgermasse ausgestaltet. Dabei weist die Reibbelagträgerplatte ein zweites Loch auf, durch die der zweite stiftförmige Vorsprung, nämlich der stiftförmige Vorsprung der zweiten Tilgermasse, eingesetzt werden kann. Sämtliche vorgenannten Merkmale bezüglich der ersten Tilgermasse, beziehungsweise des ersten Lochs in der Reibbelagträgerplatte, sind auch für die zweite Tilgermasse beziehungsweise das zweite Loch der Reibbelagträgerplatte, vorgesehen. Beispielsweise weist die Reibbelagträgerplatte im Bereich der ersten Kante des zweiten Lochs eine zweite Fase auf, welche nach Einsetzen des zweiten stiftförmigen Vorsprungs zumindest bereichsweise mit dem Kopf des zweiten stiftförmigen Vorsprungs in Verbindung steht.

Erfindungsgemäß ist ferner ein Bremsbelag für eine Scheibenbremse vorgesehen. Der Bremsbelag weist dabei einen vorbeschriebenen Trägerkörper sowie einen an der Reibbelagträgerplatte angeordneten Reibbelag auf.

Des Weiteren ist erfindungsgemäß eine Scheibenbremse, insbesondere eine Teilbelagscheibenbremse, vorgesehen, welche einen vorbeschriebenen Bremsbelag mit einem Trägerkörper gemäß den Ansprüchen 1 bis 13 und einen an der Reibbelagträgerplatte des Trägerkörpers angeordneten Reibbelag aufweist.

Des Weiteren ist erfindungsgemäß ein Verfahren zur Herstellung eines Trägerkörpers vorgesehen, wobei der Trägerkörper eine Reibbelagträgerplatte zur Aufnahme eines Reibbelags sowie mindestens eine starr mit der Reibbelagträgerplatte verbundene erste Tilgermasse aufweist. Zur Herstellung des Trägerkörpers sind erfindungsgemäß die folgenden Schritte vorgesehen:
a) Einsetzen des ersten stiftförmigen Vorsprungs der ersten Tilgermasse in das erste Loch, derart, dass das Ende des ersten stiftförmigen Vorsprungs, beziehungsweise der Kopf des ersten stiftförmigen Vorsprungs aus dem ersten Loch herausragt,
b) Andrücken der ersten Tilgermasse an die Reibbelagträgerplatte, damit die erste Seitenfläche der ersten Tilgermasse zumindest bereichsweise an einer ersten Seitenfläche der Reibbelagträgerplatte anliegt, beziehungsweise mit dieser in Kontakt steht,
c) Ausüben einer im Wesentlichen senkrecht auf den ersten stiftförmigen Vorsprung gerichteten Kraft, durch Vertaumeln oder Pressen, solange, bis der erste stiftförmige Vorsprung mit seinem Kopf teilweise im Bereich der ersten Kante des ersten Lochs an der ersten Fase anliegt, wobei diese Kraft während des Andrückens der ersten Tilgermasse an die Reibbelagträgerplatte ausgeübt wird.

### Kurze Beschreibung der Zeichnungen

Fig. 1a: schematische Darstellung eines Bremsbelags mit einer Reibbelagträgerplatte und darin angeordneter Löcher zur Aufnahme von Tilgermassen,
Fig. 1b: Querschnitt eines Bremsbelags mit einer Reibbelagträgerplatte und einem auf der Reibbelagträgerplatte angeordneten Reibbelag,
Fig. 2a: perspektivische Ansicht eines Trägerkörpers mit einer Reibbelagträgerplatte und zwei daran angeordneter Tilgermassen,
Fig. 2b:perspektivische Ansicht eines Ausschnitts einer Reibbelagträgerplatte und der damit verbundenen Tilgermasse,
Fig. 3a-3d: verschiedene Formen von Tilgermassen, und
Fig. 4: schnittbildliche Darstellung eines Ausschnitts der Verbindung einer Tilgermasse mit der Reibbelagträgerplatte.

### Bevorzugte Ausführungsformen der Erfindung

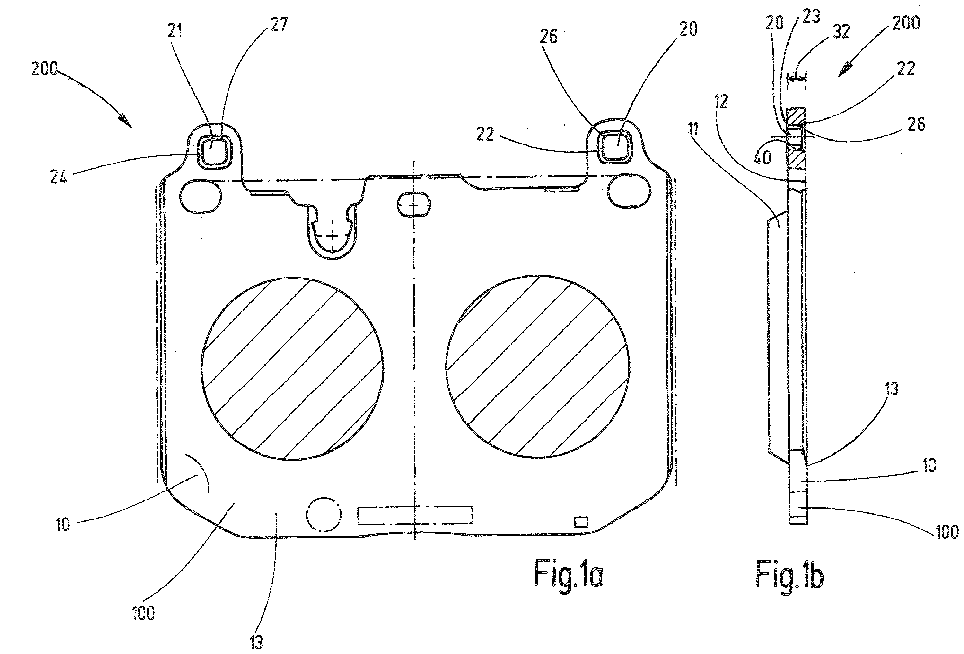

In den Fig. 1a und 1b ist ein Bremsbelag 200 in Vorderansicht sowie im Querschnitt gezeigt. Der Bremsbelag 200 weist einen Trägerkörper 100 auf, wobei lediglich die Reibbelagträgerplatte 10 des Trägerkörpers 100 ohne daran angebrachter Tilgermassen 14, 15 gezeigt ist. Ferner weist der Bremsbelag 200 einen an der ersten Seitenfläche 12 der Reibbelagträgerplatte 10 angeordneten Reibbelag 11 auf.

Die Reibbelagträgerplatte 10 weist an ihren zwei oberen Eckbereichen jeweils ein Loch, nämlich ein erstes Loch 20 und ein zweites Loch 21 zur Aufnahme der stiftförmigen Vorsprünge 18, 19 der beiden Tilgermassen 14, 15 auf. Die Ausgangsöffnung des ersten Lochs wird dabei durch eine erste umlaufende Kante 22 an der zweiten Seitenfläche 13 der Reibbelagträgerplatte 10 begrenzt. Im Bereich dieser ersten Kante 22 des ersten Lochs 20 ist eine erste Fase 26 angeordnet. Dadurch ist die erste Kante 22 des ersten Lochs 20 umlaufend abgeschrägt. Die Reibbelagträgerplatte 10 weist eine Dicke 32 auf, welche im Bereich des ersten Lochs 20 und des zweiten Lochs 21 der jeweiligen Tiefe 33, 34 des entsprechenden Lochs 20, 21 entspricht. Die erste Fase 26 sowie die zweite Fase 27 ragen über eine erste Tiefe 37, beziehungsweise eine zweite Tiefe 38 in das erste Loch 20, beziehungsweise in das zweite Loch 21 hinein. Die erste Fase 26 steht in einem ersten Winkel 35 zur Innenwand 40 des ersten Lochs 20. Die zweite Fase 27 steht in einem zweiten Winkel 36 zur Innenwand 41 des zweiten Lochs 21.

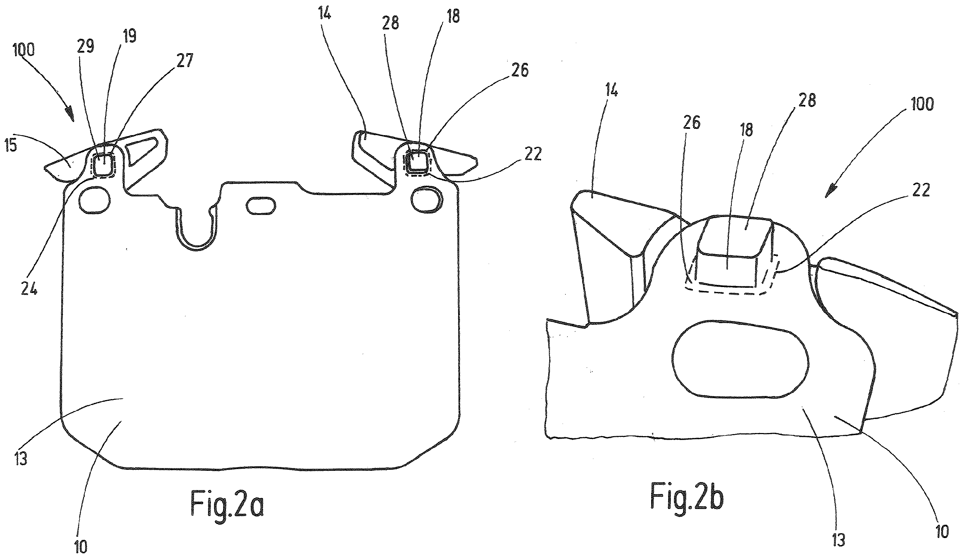

In den Fig. 2a und 2b ist eine perspektivische Ansicht eines Trägerkörpers 100 mit einer Reibbelagträgerplatte 10 und zwei daran starr befestigter Tilgermassen 14, 15 gezeigt. Dabei ist die erste Tilgermasse 14 mit ihrem ersten stiftförmigen Vorsprung 18 im ersten Loch 20 der Reibbelagträgerplatte 10 angeordnet. Wie aus den Fig. 2a und 2b zu sehen ist, steht das Ende beziehungsweise der Kopf 28 des ersten stiftförmigen Vorsprungs 18 aus dem ersten Loch 20 hervor.

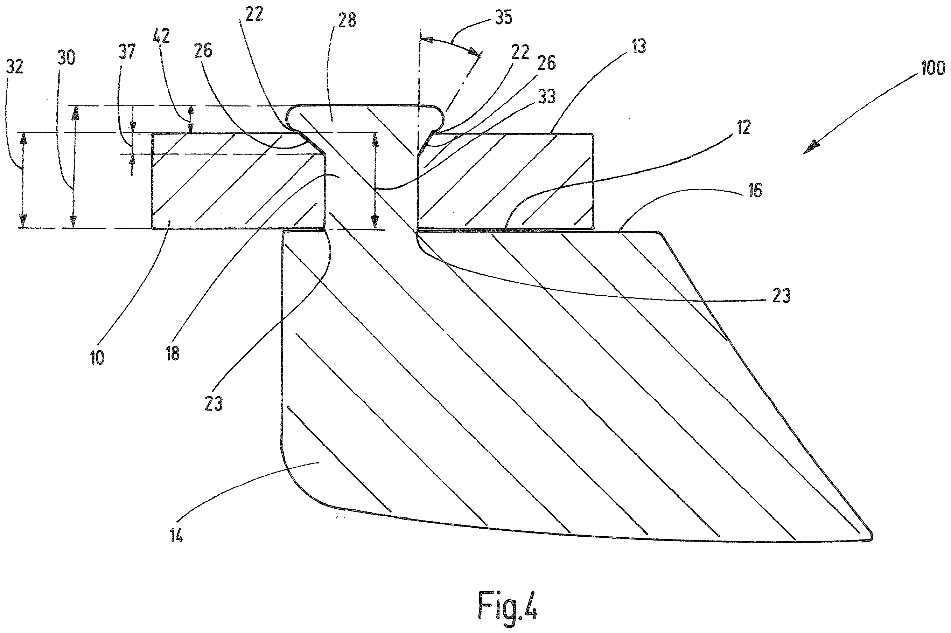

Um die beiden Tilgermassen 14, 15 fest und starr mit der Trägerplatte 10 zu verbinden, wird senkrecht durch Vertaumeln oder Pressen, eine Kraft auf den ersten stiftförmigen Vorsprung 18, beziehungsweise auf den zweiten stiftförmigen Vorsprung 19 ausgeübt. Dabei wird, sowohl der erste stiftförmige Vorsprung 18 sowie auch der zweite stiftförmige Vorsprung 19 gestaucht und insbesondere im Bereich des Kopfes 28 des ersten stiftförmigen Vorsprungs 18 beziehungsweise im Bereich des Kopfes 29 des zweiten stiftförmigen Vorsprungs 19 derart verformt, dass der jeweilige Kopf 28, 29 der beiden stiftförmigen Vorsprünge 18, 19 im Bereich der ersten Kante 22 des ersten Lochs 20, beziehungsweise im Bereich der ersten Kante 24 des zweiten Lochs 21 zumindest teilweise an der jeweiligen Fase 26, 27 anliegt. Die jeweiligen stiftförmigen Vorsprünge 18, 19 stehen nach Ausüben der Kraft, beziehungsweise nach Herstellen der starren Verbindung der beiden Tilgermassen 14, 15 mit der Reibbelagträgerplatte 10 über eine erste Länge 42, beziehungsweise eine zweite Länge 43, aus dem jeweiligen Loch 20, 21 hervor. Diesbezüglich wird auch auf Fig. 4 verwiesen. In den Fig. 2a und 2b ist das Stadium vor Ausübung der Kraft, beziehungsweise vor Herstellen der starren Verbindung gezeigt. In den Fig. 2a und 2b sind die beiden Tilgermassen 14, 15 mit ihren stiftförmigen Vorsprüngen 18, 19 in die Löcher 20, 21 eingesetzt.

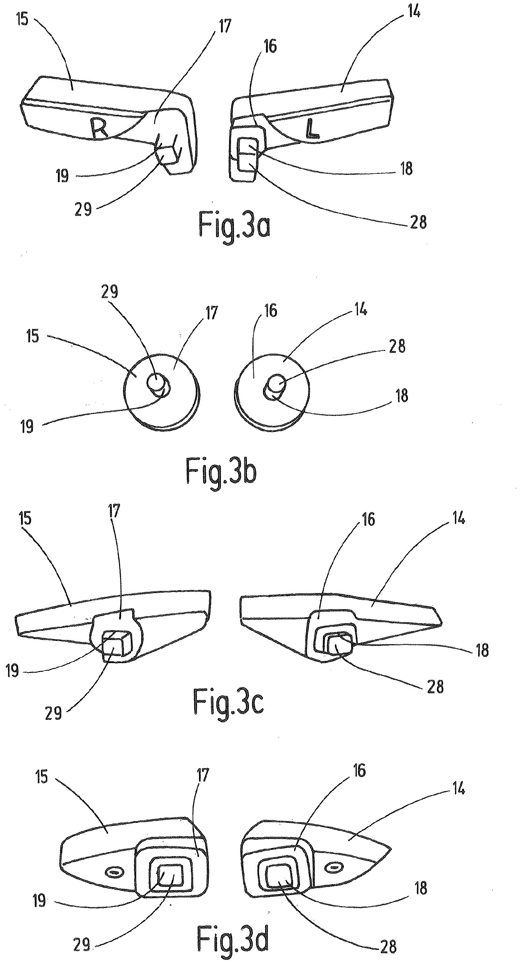

In den Fig. 3a bis 3d sind verschiedene Formen von Tilgermassen 14, 15 gezeigt. Unabhängig von der Form der jeweiligen Tilgermasse 14, 15 weist jede Tilgermasse 14, 15 einen ersten, beziehungsweise zweiten, stiftförmigen Vorsprung 18, 19, welcher von der ersten Seitenfläche 16 der ersten Tilgermasse 14, beziehungsweise der ersten Seitenfläche 17 der zweiten Tilgermasse 15 hervorsteht, auf. Dabei können die stiftförmigen Vorsprünge 18, 19 im Wesentlichen rund (vgl. Fig. 3b) sowie aber auch eckig (vgl. Fig. 3a, 3c und 3d) ausgebildet sein.

Die jeweilige erste Seitenfläche 16, 17 der beiden Tilgermassen 14, 15 steht nach Verbindung der beiden Tilgermassen 14, 15 mit der Reibbelagträgerplatte 10 mit der ersten Seitenfläche 12 der Reibbelagträgerplatte 10 in Verbindung, beziehungsweise liegt an dieser an. In Fig. 4 ist als Schnittdarstellung der Befestigungsbereich zwischen der Reibbelagträgerplatte 10 und einer ersten Tilgermasse 14 gezeigt. Dabei ist der erste stiftförmige Vorsprung 18 der ersten Tilgermasse 14 in das erste Loch 20 der Reibbelagträgerplatte 10 eingesetzt. Mit der ersten Seitenfläche 16 der ersten Tilgermasse 14 liegt die erste Tilgermasse 14 an der ersten Seitenfläche 12 der Reibbelagträgerplatte 10 an. Durch Vertaumeln oder Pressen des ersten stiftförmigen Vorsprungs 18 wurde eine starre Verbindung zwischen Reibbelagträgerplatte 10 und der ersten Tilgermasse 14 erreicht. Der erste stiftförmige Vorsprung 18 wurde aufgrund des Vorsehens der ersten Fase 26 im Bereich der ersten Kante 22 des ersten Lochs 20 über die gesamte Tiefe 33 des ersten Lochs 20 derart gestaucht, dass ein vollumfänglicher und über die gesamte Tiefe 33 des ersten Lochs 20 gebildeter Formschluss zwischen dem ersten stiftförmigen Vorsprung 18 und der Innenwand 40 des ersten Lochs 20 innerhalb des ersten Lochs 20 zu sehen ist. Mit seinem Kopf 28 steht der erste stiftförmige Vorsprung 18 über eine erste Länge 42 aus dem ersten Loch 20 hervor.

Ferner liegt der Kopf 28 des ersten stiftförmigen Vorsprungs 18 bereichsweise direkt an der ersten Fase 26 im Bereich der ersten Kante 22 des ersten Lochs 20 an.

Die Reibbelagträgerplatte 10 weist im Bereich des ersten Lochs 20 eine Dicke 32 auf, welche der Tiefe 33 des ersten Lochs 20 entspricht. Die erste Fase 26 ragt über eine erste Tiefe 37 in das erste Loch 20 hinein. Ferner bildet die erste Fase einen ersten Winkel 35 zur Innenwand 40 des ersten Lochs 20.

### Bezugszeichenliste

- 100: Trägerkörper
- 200: Bremsbelag
- 300: Scheibenbremse

- 10: Reibbelagträgerplatte
- 11: Reibbelag
- 12: erste Seitenfläche der Reibbelagträgerplatte
- 13: zweite Seitenfläche der Reibbelagträgerplatte
- 14: erste Tilgermasse
- 15: zweite Tilgermasse
- 16: erste Seitenfläche der ersten Tilgermasse
- 17: erste Seitenfläche der zweiten Tilgermasse
- 18: erster stiftförmiger Vorsprung
- 19: zweiter stiftförmiger Vorsprung
- 20: erstes Loch
- 21: zweites Loch
- 22: erste Kante des ersten Lochs
- 23: zweite Kante des ersten Lochs
- 24: erste Kante des zweiten Lochs
- 25: zweite Kante des zweiten Lochs
- 26: erste Fase
- 27: zweite Fase
- 28: Kopf des ersten stiftförmigen Vorsprungs
- 29: Kopf des zweiten stiftförmigen Vorsprungs
- 30: Länge des ersten stiftförmigen Vorsprungs
- 31: Länge des zweiten stiftförmigen Vorsprungs
- 32: Dicke der Reibbelagträgerplatte
- 33: Tiefe des ersten Lochs
- 34: Tiefe des zweiten Lochs
- 35: erster Winkel
- 36: zweiter Winkel
- 37: erste Tiefe
- 38: zweite Tiefe
- 39: Kerbe
- 40: Innenwand des ersten Lochs
- 41: Innenwand des zweiten Lochs
- 42: erste Länge
- 43: zweite Länge

## Patentansprüche

1. Trägerkörper (100) für einen Bremsbelag (200) einer Scheibenbremse (300), wobei der Trägerkörper (100) eine Reibbelagträgerplatte (10) zur Aufnahme eines Reibbelags (11) sowie mindestens eine starr mit der Reibbelagträgerplatte (10) verbundene erste Tilgermasse (14) zur Veränderung der Schwingung aufweist, wobei die erste Tilgermasse (14) eine erste Seitenfläche (16) aufweist, wobei von der ersten Seitenfläche (16) der ersten Tilgermasse (14) ein erster stiftförmiger Vorsprung (18) hervorsteht, wobei der erste stiftförmige Vorsprung (18) einen Kopf (28) aufweist, welcher im Bereich der von der ersten Seitenfläche (16) der ersten Tilgermasse (14) abgewandten Stirnseite des ersten stiftförmigen Vorsprungs (18) angeordnet ist, wobei die Reibbelagträgerplatte (10) ein erstes Loch (20) aufweist, **dadurch gekennzeichnet, dass** der erste stiftförmige Vorsprung (18) derart in das erste Loch (20) eingesetzt ist, dass der Kopf (28) des ersten stiftförmigen Vorsprungs (18) aus dem ersten Loch (20) hervorsteht und teilweise im Bereich einer ersten Kante (22) des ersten Lochs (20) an einer ersten Fase (26) anliegt.

2. Trägerkörper (100) gemäß Anspruch 1, **dadurch gekennzeichnet, dass** durch die erste Fase (26) eine Abschrägung, bevorzugterweise eine vollumfängliche Abschrägung, der ersten Kante (22) des ersten Lochs (20) gebildet ist.

3. Trägerkörper (100) gemäß Anspruch 1 oder 2, **dadurch gekennzeichnet, dass** die erste Fase (26) in einem ersten Winkel (35) zur Innenwand (40) des ersten Lochs (20) steht, wobei der erste Winkel (35) zwischen 10 Grad und 80 Grad, bevorzugterweise zwischen 25 Grad und 60 Grad, sowie besonders bevorzugterweise zwischen 40 Grad und 50 Grad, liegt.

4. Trägerkörper (100) gemäß einem der vorhergehenden Ansprüche, **dadurch gekennzeichnet, dass** die erste Fase (26) über eine erste Tiefe (37) in das erste Loch (20) hineinragt, wobei die erste Tiefe (37) weniger als 50%, bevorzugterweise weniger als 40%, besonders bevorzugterweise weniger als 30%, einer Tiefe (33) des ersten Lochs (20) entspricht.

5. Trägerkörper (100) gemäß einem der vorhergehenden Ansprüche, **dadurch gekennzeichnet, dass** der erste stiftförmige Vorsprung (18) konisch ausgebildet ist, derart, dass dessen Querschnitt von der erste Seitenfläche (16) der ersten Tilgermasse (14) betrachtet zum Kopf (28) des ersten stiftförmigen Vorsprungs (18) hin abnimmt.

6. Trägerkörper (100) gemäß einem der vorhergehenden Ansprüche, **dadurch gekennzeichnet, dass** in der ersten Fase (26) mindestens eine Kerbe (39), bevorzugterweise vollumfänglich um das erste Loch (20) herum angeordnet ist.

7. Trägerkörper (100) gemäß einem der vorhergehenden Ansprüche, **dadurch gekennzeichnet, dass** die erste Seitenfläche (16) der ersten Tilgermasse (14) an einer ersten Seitenfläche (12) der Reibbelagträgerplatte (10) anliegt.

8. Trägerkörper (100) gemäß der Ansprüche 3 bis 7, **dadurch gekennzeichnet, dass** die Innenwand (40) des ersten Lochs (20) in einem zweiten Winkel (36) zur ersten Seitenfläche (16) der ersten Tilgermasse (14) steht, wobei der zweite Winkel (35) zwischen 75 Grad und 105 Grad, bevorzugterweise zwischen 80 Grad und 100 Grad, besonders bevorzugterweise zwischen 85 Grad und 95 Grad, liegt.

9. Trägerkörper (100) gemäß einem der vorhergehenden Ansprüche, **dadurch gekennzeichnet, dass** der erste stiftförmige Vorsprung (18) innerhalb des ersten Lochs (20) im Wesentlichen vollumfänglich einen Formschluss mit der Innenwand (40) des ersten Lochs (20) bildet.

10. Trägerkörper (100) gemäß einem der vorhergehenden Ansprüche, **dadurch gekennzeichnet, dass** der erste stiftförmige Vorsprung (18) innerhalb des ersten Lochs (20) im Wesentlichen über eine gesamte Tiefe (33) des ersten Lochs (20) einen Formschluss mit der Innenwand (40) des ersten Lochs (20) bildet.

11. Trägerkörper (100) gemäß einem der vorhergehenden Ansprüche, **dadurch gekennzeichnet, dass** der erste stiftförmige Vorsprung (18) mit seinem Kopf (28) über eine erste Länge (42) aus dem ersten Loch (20) herausragt, wobei die erste Länge (20) weniger als 25%, bevorzugterweise weniger als 15%, besonders bevorzugterweise weniger als 10%, einer Tiefe des ersten Lochs (20) entspricht.

12. Trägerkörper (100) gemäß einem der vorhergehenden Ansprüche, **dadurch gekennzeichnet, dass** der erste stiftförmige Vorsprung (18) einen eckigen, runden oder ovalen Querschnitt aufweist.

13. Trägerkörper (100) gemäß einem der vorhergehenden Ansprüche, **dadurch gekennzeichnet, dass** der Trägerkörper (100) eine starr mit der Reibbelagträgerplatte (10) verbundene zweite Tilgermasse (15) zur Veränderung der Schwingung aufweist.

14. Bremsbelag (200) aufweisend einen Trägerkörper gemäß einem der Ansprüche 1 bis 13 sowie einen an der Reibbelagträgerplatte (10) angeordneten Reibbelag (11).

15. Scheibenbremse (300), insbesondere eine Teilbelagscheibenbremse, aufweisend einen Bremsbelag (200) gemäß Anspruch 14.

16. Verfahren zur Herstellung eines Trägerkörpers (100) gemäß einem der Ansprüche 1 bis 13, aufweisend folgende Schritte:
a) Einsetzen des ersten stiftförmigen Vorsprungs (18) in das erste Loch (20),
b) Andrücken der ersten Tilgermasse (14) an die Reibbelagträgerplatte (10), damit die erste Seitenfläche (16) der ersten Tilgermasse (14) an einer ersten Seitenfläche (12) der Reibbelagträgerplatte (10) anliegt,
c) Ausüben einer im Wesentlichen senkrecht auf den ersten stiftförmigen Vorsprung (18) gerichteten Kraft durch Vertaumeln oder Pressen, solange, bis der erste stiftförmige Vorsprung (18) mit seinem Kopf (28) teilweise im Bereich der ersten Kante (22) des ersten Lochs (20) an der ersten Fase (26) anliegt. wobei diese Kraft während des Andrückens der ersten Tilgermasse (14) an die Reibbelagträgerplatte (10) ausgeübt wird.

## Claims

1. A carrier body (100) for a brake lining (200) of a disk brake (300), wherein the carrier body (100) has a friction lining carrier plate (10) for receiving a friction lining (11) as well as at least one first damper mass (14) rigidly connected to the friction lining carrier plate (10) for changing the vibration, wherein the first damper mass (14) has a first side surface (16), wherein a first pin-shaped projection (18) protrudes from the first side surface (16) of the damper mass (14), wherein the first pin-shaped projection (18) has a head (28) which is arranged in the region of the front side of the pin-shaped projection (18) facing away from the first side surface (16) of the first damper mass (14), wherein the friction lining carrier plate (10) has a first hole (20), **characterized in that** the first pin-shaped projection (18) is inserted into the first hole (20) in such a way that the head (28) of the first pin-shaped projection (18) protrudes out of the first hole (20) and rests against a first chamfer (26) partially in the region of a first edge (22) of the first hole (20).

2. The carrier body (100) of claim 1, **characterized in that** the first chamfer (26) forms a taper, preferably a complete taper, of the first edge (22) of the first hole (20).

3. The carrier body (100) of claim 1 or 2, **characterized in that** the first chamfer (26) is arranged at a first angle (35) with respect to the inner wall (40) of the first hole (20), wherein the first angle (35) is between 10 degrees and 80 degrees, preferably between 25 degrees and 60 degrees, and particularly preferably between 40 degrees and 50 degrees.

4. The carrier body (100) of one of the preceding claims, **characterized in that** the first chamfer (26) protrudes over a first depth (37) into the first hole (20), wherein the first depth (37) corresponds to less than 50%, preferably less than 40%, particularly preferably less than 30% of a depth (33) of the first hole (20).

5. The carrier body (100) of one of the preceding claims, **characterized in that** the first pin-shaped projection (18) is formed conically in such a way that its cross section decreases toward the head (28) of the first pin-shaped projection (18) as viewed from the first side surface (16) of the first damper mass (14).

6. The carrier body (100) of one of the preceding claims, **characterized in that** in the first chamfer (26) at least one notch (39) is arranged, preferably to the full extent, around the first hole (20).

7. The carrier body (100) of one of the preceding claims, **characterized in that** the first side surface (16) of the first damper mass (14) rests against a first side surface (12) of the friction lining carrier plate (10).

8. The carrier body (100) of any one of claims 3 to 7, **characterized in that** the inner wall (40) of the first hole (20) is arranged at a second angle (36) with respect to the first side surface (16) of the first damper mass (14), wherein the second angle (36) is between 75 degrees and 105 degrees, preferably between 80 degrees and 100 degrees, particularly preferably between 85 degrees and 95 degrees.

9. The carrier body (100) of one of the preceding claims, **characterized in that** the first pin-shaped projection (18) substantially forms a complete positive locking with the inner wall (40) of the first hole (20) within the first hole (20).

10. The carrier body (100) of one of the preceding claims, **characterized in that** the first pin-shaped projection (18) forms a positive locking with the inner wall (40) of the first hole (20) within the first hole (20) substantially over an entire depth (33) of the first hole (20).

11. The carrier body (100) of one of the preceding claims, **characterized in that** the first pin-shaped projection (18) protrudes with its head (28) over a first length (42) out of the first hole (20), wherein the first length (42) corresponds less than 25%, preferably less than 15%, particularly preferably less than 10% to a depth of the first hole (20).

12. The carrier body (100) of one of the preceding claims, **characterized in that** the first pin-shaped projection (18) has an angular, round or oval cross section.

13. The carrier body (100) of one of the preceding claims, **characterized in that** carrier body (100) has a second damper mass (15) connected rigidly to the friction lining carrier plate (10) for changing the vibration.

14. A brake lining (200) having a carrier body according to any of claims 1 to 13 as well as a friction lining (11) arranged on the friction lining carrier plate (10).

15. A disk brake (300), in particular a partially lined disk brake, having a brake lining (200) according to claim 14.

16. A method for producing a carrier body (100) according to any of claims 1 to 13, having the following steps:
a) inserting the first pin-shaped projection (18) into the first hole (20),
b) pressing the first damper mass (14) onto the friction lining carrier plate (10) so that the first side surface (16) of the first damper mass (14) rests against a first side surface (12) of the friction lining carrier plate (10),
c) exerting a force directed substantially vertically onto the first pin-shaped projection (18), by way of tumbling or pressing until the first pin-shaped projection (18) rests with its head (28) against the first chamfer (26) partially in the region of the first edge (22) of the first hole (20), wherein said force is exerted during the pushing of the first damper mass (14) onto the friction lining carrier plate (10).

## Revendications

1. Élément de support (100) pour une garniture de frein (200) d'un frein à disque (300), l'élément de support (100) comportant une plaque porteuse de garniture de friction (10) destinée à recevoir une garniture de friction (11), ainsi qu'au moins une première masse d'amortissement (14) reliée de manière rigide avec la plaque porteuse de garniture de friction (10), destinée à modifier la vibration, la première masse d'amortissement (14) comportant une première surface latérale (16), à partir de la première surface latérale (16) de la première masse d'amortissement (14) débordant une première saillie (18) en forme de goujon, la première saillie (18) en forme de goujon comportant une tête (28) qui est placée dans la région de la face frontale opposée à la première surface latérale (16) de la première masse d'amortissement (14) de la première saillie (18) en forme de goujon, la plaque porteuse de garniture de friction (10) comportant un premier trou (20), **caractérisé en ce que** la première saillie (18) en forme de goujon est insérée dans le premier trou (20) de telle sorte que la tête (28) de la première saillie (18) en forme de goujon déborde hors du premier trou (20) et soit adjacente en partie, dans la région d'une première arête (22) du premier trou (20) à un premier chanfrein (26).

2. Élément de support (100) selon la revendication 1, **caractérisé en ce que** par le premier chanfrein (26), il est créé une inclinaison, de préférence une inclinaison intégrale de la première arête (22) du premier trou (20).

3. Élément de support (100) selon la revendication 1 ou 2, **caractérisé en ce que** le premier chanfrein (26) présente un premier angle (35) par rapport à la paroi intérieure (40) du premier trou (20), le premier angle (35) se situant entre 10 degrés et 80 degrés, de préférence entre 25 degrés et 60 degrés, ainsi que de manière particulièrement préférentielle, entre 40 degrés et 50 degrés.

4. Élément de support (100) selon l'une quelconque des revendications précédentes,
**caractérisé en ce que** le premier chanfrein (26) déborde sur une première profondeur (37) dans le premier trou (20), la première profondeur (37) correspondant à moins de 50 %, de préférence à moins de 40 %, de manière particulièrement préférée, à moins de 30 % d'une profondeur (33) du premier trou (20).

5. Élément de support (100) selon l'une quelconque des revendications précédentes, **caractérisé en ce que** la première saillie (18) en forme de goujon est conçue en étant conique, de telle sorte que sa section transversale décroisse, considérée de la première surface latérale (16) de la première masse d'amortissement (14) vers la tête (28) de la première saillie (18) en forme de goujon.

6. Élément de support (100) selon l'une quelconque des revendications précédentes,
**caractérisé en ce que** dans le premier chanfrein (26) est placée au moins une entaille (39), de préférence sur toute la périphérie autour du premier trou (20).

7. Élément de support (100) selon l'une quelconque des revendications précédentes,
**caractérisé en ce que** la première surface latérale (16) de la première masse d'amortissement (14) est adjacente à une première surface latérale (12) de la plaque porteuse de garniture de friction (10).

8. Élément de support (100) selon les revendications 3 à 7, **caractérisé en ce que** la paroi intérieure (40) du premier trou (20) est placée sous un deuxième angle (36) par rapport à la première surface latérale (16) de la première masse d'amortissement (14), le deuxième angle (35) se situant entre 75 degrés et 105 degrés, de préférence entre 80 degrés et 100 degrés, de manière particulièrement préférentielle, entre 85 degrés et 95 degrés.

9. Élément de support (100) selon l'une quelconque des revendications précédentes,
**caractérisé en ce que** la première saillie (18) en forme de goujon forme à l'intérieur du premier trou (20), sensiblement sur toute la périphérie une complémentarité de forme avec la paroi intérieure (40) du premier trou (20).

10. Élément de support (100) selon l'une quelconque des revendications précédentes,
**caractérisé en ce que** la première saillie (18) en forme de goujon forme à l'intérieur du premier trou (20), sensiblement sur toute la profondeur (33) du premier trou (20) une complémentarité de forme avec la paroi intérieure (40) du premier trou (20).

11. Élément de support (100) selon l'une quelconque des revendications précédentes, **caractérisé en ce que** la première saillie (18) en forme de goujon déborde par sa tête (28) d'une première longueur (42) hors du premier trou (20), la première longueur (20) correspondant à moins de 25 %, de préférence à moins de 15 %, de manière particulièrement préférentielle, à moins de 10 % d'une profondeur du premier trou (20).

12. Élément de support (100) selon l'une quelconque des revendications précédentes,
**caractérisé en ce que** la première saillie (18) en forme de goujon présente une section transversale angulaire, ronde ou ovale.

13. Élément de support (100) selon l'une quelconque des revendications précédentes,
**caractérisé en ce que** l'élément de support (100) comporte une deuxième masse d'amortissement (15), reliée de manière rigide avec la plaque porteuse de garniture de friction (10), pour modifier la vibration.

14. Garniture de frein (200) comportant un élément de support selon l'une quelconque des revendications 1 à 13, ainsi qu'une garniture de friction (11) placée sur la plaque porteuse de garniture de friction (10).

15. Frein à disque (300), notamment un frein à disque à garniture partielle, comportant une garniture de frein (200) selon la revendication 14.

16. Procédé destiné à fabriquer un élément de support (100) selon l'une quelconque des revendications 1 à 13, comportant les étapes suivantes :
a) de l'insertion de la première saillie (18) en forme de goujon dans le premier trou (20),
b) de la pression de la première masse d'amortissement (14) contre la plaque porteuse de garniture de friction (10), pour que la première surface latérale (16) de la première masse d'amortissement (14) soit adjacente à une première surface latérale (12) de la plaque porteuse de garniture de friction (10),
c) de l'exercice d'une force orientée sensiblement à la perpendiculaire sur la première saillie (18) en forme de goujon par nutation ou pressage jusqu'à ce que par sa tête (28), la première saillie (18) en forme de goujon soit adjacente en partie dans la région de la première arête (22) du premier trou (20) au premier chanfrein (26), ladite force étant exercée pendant que la première masse d'amortissement (14) est pressée contre la plaque porteuse de garniture de friction (10).
